(19) Europäisches Patentamt / European Patent Office / Office européen des brevets

(11) **EP 1 921 384 B1**

(12) **EUROPÄISCHE PATENTSCHRIFT**

(45) Veröffentlichungstag und Bekanntmachung des Hinweises auf die Patenterteilung:
**27.05.2009 Patentblatt 2009/22**

(51) Int Cl.:
*F24C 7/08* (2006.01)  *H05B 6/68* (2006.01)

(21) Anmeldenummer: **06022798.0**

(22) Anmeldetag: **02.11.2006**

(54) **Vorrichtung und Verfahren zum Bestimmen der Temperatur im Inneren eines Garguts**

Device and method for determining the inner temperature of food

Dispositif et procédé pour déterminer la température intérieure d'un produit à cuire

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**14.05.2008 Patentblatt 2008/20**

(73) Patentinhaber: **Electrolux Home Products Corporation N.V.**
**1930 Zaventem (BE)**

(72) Erfinder:
• **Luckhardt, Christoph**
**36277 Schenklengsfeld (DE)**
• **Ruther, Florian**
**91541 Rothenburg o. d. Tauber (DE)**

(74) Vertreter: **Hochmuth, Jürgen**
**AEG Hausgeräte GmbH,**
**Patente, Marken & Lizenzen**
**90327 Nürnberg (DE)**

(56) Entgegenhaltungen:
**EP-A- 1 150 549**       **EP-A2- 0 264 935**
**DE-A1- 19 533 514**      **US-A- 5 693 247**

**Beschreibung**

Die Erfindung betrifft eine Vorrichtung zum Bestimmen der Temperatur im Inneren eines Garguts gemäß dem Oberbegriff des Patentanspruches 1. Weiterhin betrifft die Erfindung ein Gargerät mit der Vorrichtung zum Bestimmen der Temperatur im Inneren des Garguts. Außerdem ist gemäß der Erfindung ein Verfahren zum Bestimmen der Temperatur im Inneren des Garguts gemäß dem Oberbegriff des Patentanspruches 20 vorgesehen.

Die Temperatur im Innern eines Garguts ist ein Indiz dafür, in welchem Zubereitungsstadium sich das Gargut befindet. Insbesondere die Temperatur an der kältesten Stelle des Garguts, die sich meist in dessen Zentrum befindet, ist für den Zustand des Garguts relevant. Auch der Pasteurisierungswert des Garguts steht mit der Temperatur an dessen kältester Stelle im Zusammenhang.

Die Temperatur des Garguts, das sich in einem Gargerät befindet, kann mit einer Temperatursonde gemessen werden. Die Temperatursonde ist beispielsweise als Fleischspieß ausgebildet und über ein Kabel mit dem Gargerät elektrisch gekoppelt. Es ist für den Benutzer jedoch schwierig, die kälteste Stelle des Garguts zu finden. Außerdem wird das Kabel vom Benutzer als störend empfunden.

Aus der EP 1 150 549 A2 ist ein Mikrowellenherd mit einem Infrarotsensor bekannt. Der Infrarotsensor umfasst eine Vielzahl Sensorelemente und ist zur Erfassung der Oberflächentemperatur und.der Form des Garguts vorgesehen.

In der EP 0 264 935 A2 ist ein automatisches Heizgerät mit Ultraschalldetektor beschrieben. Der Ultraschalldetektor erfasst die Abstände zwischen dem Gargut und dem Detektor, um die Form des Garguts zu bestimmen.

Es ist Aufgabe der Erfindung, eine verbesserte Vorrichtung und ein verbessertes Verfahren zum Bestimmen der Temperatur im Inneren des Garguts bereit zu stellen.

Diese Aufgabe wird hinsichtlich der Vorrichtung durch den Gegenstand gemäß Patentanspruch 1 gelöst.

Erfindungsgemäß weist die Vorrichtung zum Bestimmen der Temperatur im Inneren eines Garguts Folgendes auf:

-   wenigstens einen Abstandssensor zum Erfassen eines oder einer Vielzahl von Abständen zwischen dem Abstandssensor einerseits und eines oder einer Vielzahl von Abstandsmesspunkten auf der Oberfläche des Garguts andererseits,
-   wenigstens eine Zeitmesseinrichtung zum Erfassen der Zeit während einer Zubereitung des Garguts, und
-   wenigstens eine Berechnungseinrichtung zum Berechnen der Temperatur im Inneren des Garguts aus der Oberflächentemperatur des Garguts und/oder der Umgebungstemperatur, des einen oder der Vielzahl von Abständen, der Zeit und einer Anfangstemperatur des Garguts.

Der Kern der Erfindung liegt in der Kombination des Temperatursensors und des Abstandssensors, so dass gleichzeitig die Oberflächentemperatur und/oder Umgebungstemperatur und zumindest ein Teil der Geometrie des Garguts erfasst werden können. Mit der Zeit, der Anfangstemperatur und weiteren Parametern lässt sich daraus die Temperatur im Inneren des Garguts berechnen. Die weiteren Parameter können explizit eingegeben oder implizit in der Berechnungseinrichtung enthalten sein. Durch Eichprozesse mit unterschiedlichem Gargut kann beispielsweise ein Parameterfeld erstellt und in der Berechnungseinrichtung abgespeichert werden.

Vorzugsweise ist die Berechnungseinrichtung zum Berechnen der Temperatur im Inneren des Garguts auf der Grundlage einer Wärmeleitungsgleichung vorgesehen oder programmierbar. Mit der Wärmeleitungsgleichung und den gemessenen Werten lässt sich die Temperatur im Inneren des Garguts berechnen. Mit einer Näherung der Wärmeleitungsgleichung kann die Berechnung besonders einfach durchgeführt werden. Dabei wird beispielsweise davon ausgegangen, dass das Gargut eine besonders einfache geometrische Form, beispielsweise die eines Zylinders oder eines Quaders, aufweist.

Beispielsweise kann die Berechnungseinrichtung zum Berechnen der geometrischen Form des Garguts aus einem oder einer Vielzahl von Abständen vorgesehen oder programmierbar sein. Je mehr Abstandsmesspunkte dabei verwendet werden, desto genauer lässt sich die Form des Garguts bestimmen. Bei nur einem Abstandsmesspunkt muss die Einschubhöhe des Garguts bekannt sein.

Weiterhin kann die Berechnungseinrichtung zum Berechnen der Temperatur im Inneren des Garguts aus oder unter Zuhilfenahme der geometrischen Form des Garguts vorgesehen oder programmierbar sein. Mit einer numerischen Lösung der Wärmeleitungsgleichung kann auch Gargut mit einer ungleichmäßigen Form berechnet werden.

Vorzugsweise ist die Berechnungseinrichtung zum Berechnen der Temperatur in einem Zentrum des Garguts vorgesehen oder programmierbar. Das Zentrum des Garguts ist bei vielen Garvorgängen die kälteste Stelle. Somit lässt sich aus dem zeitlichen Verlauf der Temperatur im Zentrum des Garguts erkennen, ob und wann der Garvorgang abgeschlossen ist.

Bei der bevorzugten Ausführungsform ist der Temperatursensor als ein optischer Sensor und/oder als ein Infrarotsensor ausgebildet. Auch der Abstandssensor ist vorzugsweise als ein optischer Sensor und/oder als ein Infrarotsensor ausgebildet, kann aber auch ein Ultraschallsensor oder Radarsensor sein. Der Temperatursensor und der Abstandssensor können im oder am Garraum so angeordnet werden, dass der Benutzer dies nicht als störend empfindet.

Außerdem kann die Vorrichtung ein Prisma oder einen Spiegel oder eine andere optische Umlenkeinrichtung aufweisen, das oder der im Strahlengang zwischen dem Temperatursensor und/oder Abstandssensor einerseits und dem Gargut bzw. einem für das Gargut vorgesehenen Bereich andererseits angeordnet oder anbringbar ist.

In einer vorteilhaften Ausführungsform ist eine zumindest abschnittsweise, vorzugsweise optische, Abtastung der Oberfläche des Gargutes vorgesehen.

Dazu ist in einer ersten Variante vorgesehen, dass der Temperatursensor und/oder der Abstandssensor schwenkbar, verschiebbar und/oder drehbar in oder an einem Garraum angeordnet oder anbringbar sind, so dass durch wenigstens einen Lichtstrahl bzw. Infrarotstrahl die Oberfläche des Garguts zumindest abschnittsweise abtastbar ist.

Auch das Prisma oder der Spiegel oder die optische Umlenkeinrichtung kann schwenkbar, verschiebbar und/oder drehbar in oder an dem Garraum angeordnet oder anbringbar sein. Wenn der Spiegel, das Prisma oder die optische Umlenkeinrichtung schwenkbar ist, können der Temperatursensor und Abstandssensor fest und unbeweglich angebracht sein. Dabei ist der konstruktive Aufwand besonders gering, da lediglich das Prisma oder der Spiegel oder die optische Umlenkeinrichtung bewegbar ist.

Der Temperatursensor kann zum Erfassen der Oberflächentemperatur an einer Vielzahl von Temperaturmesspunkten auf der Oberfläche des Garguts vorgesehen sein. Damit lässt sich die Temperaturverteilung besonders exakt erfassen.

Zweckmäßigerweise sind die Abstandsmesspunkte und/oder die Temperaturmesspunkte nach einem vorbestimmten Schema ausgewählt oder auswählbar.

Bei der bevorzugten Ausführungsform sind der Temperatursensor, der Abstandssensor und/oder das Prisma oder der Spiegel außerhalb des Garraums in einem kühlen oder gekühlten Bereich angeordnet oder anbringbar. Dies ermöglicht die Verwendung kostengünstiger Sensoren und trägt zu einer hohen Messgenauigkeit bei. Dabei ist der gekühlte Bereich beispielsweise als ein Kühlkanal mit wenigstens einer Kühleinrichtung, insbesondere einem Gebläse ausgebildet.

Vorzugsweise weist die Vorrichtung eine Eingabeeinrichtung zum manuellen oder automatischen Eingeben von einem oder mehreren Parametern auf. Damit kann auch der Benutzer Parameter eingeben, die beispielsweise das Gargut betreffen.

Vorteilhafterweise ist die Eingabeeinrichtung mit der Berechnungseinrichtung gekoppelt, so dass der oder die Parameter zum Berechnen der Temperatur im Inneren des Garguts verwendbar sind. Somit können bekannte Parameter für die Berechnung verwendet und berücksichtigt werden.

Weiterhin betrifft die Erfindung ein Gargerät, das die oben beschriebene Vorrichtung zum Bestimmen der Temperatur im Inneren eines Garguts aufweist.

Vorzugsweise umfasst das Gargerät einen kühlen oder gekühlten Bereich, in dem der Temperatursensor, der Abstandssensor und/oder das Prisma oder der Spiegel oder die Umlenkeinrichtung angebracht oder anbringbar sind. Beispielsweise ist der kühle oder gekühlte Bereich als ein Gebläsekanal ausgebildet.

Hinsichtlich des Verfahrens wird die Aufgabe durch den Gegenstand gemäß Patentanspruch 20 gelöst.

Erfindungsgemäß weist das Verfahren zum Bestimmen der Temperatur im Inneren eines Garguts die weiteren Schritte auf:

- Erfassen eines oder einer Vielzahl von Abständen zwischen einer vorbestimmten Position einerseits und eines oder einer Vielzahl von Abstandsmesspunkten auf der Oberfläche des Garguts andererseits,
- Erfassen der Zeit während eines Garvorgangs, und
- Berechnen der Temperatur im Inneren des Garguts aus der Oberflächentemperatur des Garguts und/oder der Umgebungstemperatur, eines oder einer Vielzahl von Abständen, der Zeit und einer Anfangstemperatur des Garguts.

Der Kern des erfindungsgemäßen Verfahrens liegt in der Kombination der Temperaturerfassung und der Abstandserfassung, so dass gleichzeitig die Oberflächentemperatur und die Geometrie des Garguts bestimmt werden können. Mit der Zeit, der Anfangstemperatur und weiteren Parametern lässt sich daraus die Temperatur im des Garguts berechnen.

Insbesondere ist vorgesehen, dass die Temperatur im Inneren des Garguts auf der Grundlage einer Wärmeleitungsgleichung berechnet wird. Die wärmeleitungsgleichung und die gemessenen Werte ermöglichen die Berechnung der Temperatur im Inneren des Garguts. Mit einer Näherung der Wärmeleitungsgleichung kann die Berechnung besonders einfach durchgeführt werden. Dabei wird beispielsweise davon ausgegangen, dass das Gargut eine besonders einfache geometrische Form, beispielsweise die eines Zylinders oder eines Quaders, aufweist.

Beispielsweise kann die geometrische Form des Garguts aus der Vielzahl von Abständen berechnet werden. Anschließend kann die Temperatur im Inneren des Garguts auch aus der geometrischen Form des Garguts berechnet werden.

Bei der bevorzugten Ausführungsform wird die Temperatur in einem Zentrum des Garguts bestimmt. Das Zentrum des Garguts ist bei vielen Garvorgängen die kälteste Stelle. Daher lässt sich aus dem zeitlichen Verlauf der Temperatur im Zentrum des Garguts erkennen, ob und wann der Garvorgang abgeschlossen ist.

Messtechnisch wird der Abstand oder die Vielzahl der Abstände durch Abtasten zumindest eines Abschnitts der Oberfläche des Garguts mittels eines Infrarotstrahls erfasst. Auch die Temperatur kann durch Abtasten zumindest eines Abschnitts der Oberfläche des Garguts mittels eines Infrarotstrahls erfasst werden.

Weiterhin können als Parameter der zeitliche Verlauf der Oberflächentemperatur des Garguts, die Dichte des Garguts, der Wärmeübertragungskoeffizient, die Wärmeleitfähigkeit des Garguts und/oder die Wärmekapazität des Garguts verwendet werden.

Wenn eine Annahme getroffen werden kann oder empirisch vorab ermittelt wurde, wie sich das Temperaturprofil von Oberflächentemperatur und/oder Umgebungstemperatur weiter verhalten wird, kann in einer weiteren Ausführungsform mit Hilfe der Wärmeleitungsgleichung extrapoliert werden, nach welcher Zeit eine vorher bestimmte Kerntemperatur erreicht worden sein wird.

Auf diese Weise kann dem Benutzer frühzeitig mitgeteilt werden, wann der Kochprozess abgeschlossen sein wird.

Schließlich ist vorgesehen, dass aus dem zeitlichen Verlauf der Temperatur im Zentrum des Garguts der Pasteurisierungswert für das Gargut berechnet wird. Die erforderlichen Parameter können dabei zugeordnet werden, wenn der Benutzer die Art des Garguts mittels einer Menüauswahl eingibt.

Weitere Merkmale, Vorteile und besondere Ausführungsformen der Erfindung sind Gegenstand der Unteransprüche.

Die Vorrichtung zum Bestimmen thermischer Größen gemäß der Erfindung wird nachstehend am Beispiel einer bevorzugten Ausführungsform und unter Bezugnahme auf die beigefügte Zeichnung näher erläutert. Es zeigt die einzige FIG eine schematische Schnittansicht eines Garraums mit einer bevorzugten Ausführungsform der erfindungsgemäßen Vorrichtung.

Die FIG zeigt eine schematische Schnittansicht eines Garraums 10 eines Gargerätes. Das Gargerät umfasst eine Vorrichtung zum Bestimmen der Temperatur im Inneren eines Garguts 12. An den Innenseiten der beiden Seitenwände des Garraums 10 befinden sich Führungsschienen 24, die jeweils paarweise auf gleicher Höhe angeordnet sind. Die Führungsschienen 24 sind waagrecht angeordnet und erstrecken sich senkrecht zur Zeichnungsebene. Auf zwei Führungsschienen 24 in gleicher Höhe befindet sich ein Einschub 14, der beispielsweise als Gitterrost oder als Backblech ausgebildet sein kann. Auf dem Einschub 14 befindet sich das Gargut 12. Das Gargut 12 ist ebenfalls als Schnittansicht dargestellt. Im Inneren des Garguts 12 sind Isothermen 16 dargestellt, um die räumliche Temperaturverteilung zu verdeutlichen. Ein Zentrum 18 bildet die geometrische Mitte des Garguts 12. Da das Gargut 12 von Außen nach Innen erwärmt wird, bildet das Zentrum 18 die kälteste Stelle des Garguts 12.

Oberhalb des Garraums 10 sind ein Temperatursensor 20 und ein Abstandssensor 22 angebracht. In dieser konkreten Ausführungsform sind der Temperatursensor 20 und der Abstandssensor 22 als Infrarotsensoren ausgebildet. Weiterhin ist oberhalb des Garraums 10 ein Spiegel 30 angeordnet. Der Spiegel 30 ist schwenkbar um eine Drehachse 32 angebracht. Die Drehachse 32 erstreckt sich senkrecht zur Zeichnungsebene. Bei alternativen Ausführungsformen kann der Spiegel auch um zwei oder mehr Drehachsen schwenkbar sein. Weiterhin besteht die Möglichkeit, dass der Spiegel 30 oberhalb des Garraums 10 waagrecht verschiebbar ist. Bei der letztgenannten Möglichkeit ist es nicht unbedingt erforderlich, dass der Spiegel 30 schwenkbar ist.

Weiterhin umfasst die Vorrichtung eine Eingabeeinrichtung und eine Berechnungseinrichtung, die in der Zeichnung nicht dargestellt sind. Mit der Eingabeeinrichtung kann der Benutzer Parameter eingeben, die das Gargut und/oder die Zubereitungsart betreffen. Die Parameter können beispielsweise direkt eingegeben werden. Ebenso kann der Benutzer die Art des Garguts und gegebenenfalls dessen Gewicht eingeben. Daraus können in der Berechnungseinrichtung entsprechende Parameterwerte zugeordnet werden.

Der Temperatursensor 20, der Abstandssensor 22 und der Spiegel 30 sind so ausgerichtet, dass die Infrarotstrahlen zwischen dem Temperatursensor 20 bzw. Abstandssensor 22 einerseits und dem Spiegel 30 andererseits waagrecht oberhalb des Garraums verlaufen. Außerdem ist der Spiegel 30 so ausgerichtet, dass aufgrund der Reflexion die Infrarotstrahlen 26 und 28 zwischen dem Spiegel 30 und der Oberseite des Garguts 12 und des Einschubs 14 verlaufen. Der Spiegel 30 ist so bewegbar, dass die vollständige Breite des Garraums 10 mit den Infrarotstrahlen 26 und 28 abgetastet werden kann.

Durch die Bewegung des Spiegels 30 wird die Oberseite des Garguts 12 sowohl von dem Infrarotstrahl 26 des Temperatursensors 20 als auch von dem Infrarotstrahl 28 des Temperatursensors 22 abgetastet. Ebenso wird derjenige Teil des Einschubs 14, der von dem Gargut 10 nicht bedeckt ist, abgetastet. An einer Vielzahl von Temperaturmesspunkten 34, die nach einem vorbestimmten Schema ausgewählt werden, wird die Temperatur mittels des Temperatursensors 20 an der Oberfläche des Garguts 12 erfasst. Auf ähnliche Weise wird an einer Vielzahl von Abstandsmesspunkten 36, die ebenfalls nach einem vorbestimmten Schema ausgewählt werden, der Abstand zwischen dem Abstandsmesspunkt 36 und dem Abstandssensor 22 erfasst. Durch die Vielzahl der Abstandsmessungen lässt sich die geometrische Form des Garguts 12 bestimmen.

Mit der erfassten Oberflächentemperatur und geometrischen Form des Garguts 12 und weiteren bekannten Parametern lässt sich die Temperatur im Zentrum 18 des Garguts 12 berechnen. Dazu wird eine Approximation der Wärmeleitungsgleichung, vorzugsweise eine Näherungsgleichung für zylindrische oder flache Körper verwendet. Bei der Wärmeleitungsgleichung handelt es sich um eine Differenzialgleichung, in der insbesondere die Temperatur sowie deren räumliche und zeitliche Ableitung auftreten.

Für die Berechnung der Temperatur im Zentrum 18 des Garguts 12 werden die Anfangstemperatur des Garguts 12, der Wärmeübertragungskoeffizient im Garraum 10, die Zeit seit Beginn des Garvorgangs und der zeitliche Verlauf der Temperatur verwendet. Weiterhin werden nahrungsmittelspezifische Parameter für die Berechnung der Temperatur im Zentrum 18 des Garguts 12 verwendet. Dabei handelt es sich um die Dichte, die Wärmeleitfähigkeit, die Wärmekapazität und die Länge oder Form des Garguts 12.

Die thermischen Parameter des Garguts 12 können beispielsweise direkt eingegeben werden. Alternativ kann der Benutzer die Art des Nahrungsmittel mittels eines Auswahlmenüs auswählen und eingeben, wobei die thermischen Parameter von der Berechnungseinrichtung zugeordnet und bereit gestellt werden. Der Wärmeübertragungskoeffizient im Garraum 10 hängt von der Art der Wärmezufuhr ab und kann beispielsweise von einer Steuer- oder Regeleinrichtung des Gargerätes bereitgestellt werden. Die Zeit seit Beginn des Garvorgangs wird von einer Zeitmesseinrichtung erfasst, die in der Zeichnung nicht dargestellt ist. Der zeitliche Verlauf der Temperatur wird durch die Kombination der erfassten Zeiten und Temperaturen bereitgestellt. Die Anfangstemperatur des Garguts 12 wird von dem Temperatursensor 20 erfasst.

Aus dem zeitlichen Verlauf der Temperatur im Zentrum 18 des Garguts 12 lässt sich bestimmen, ob die Zubereitung des Garguts 12 abgeschlossen ist.

Weiterhin lässt sich aus dem zeitlichen Verlauf der Temperatur im Zentrum 18 des Garguts 12 der Pasteurisierungswert des Garguts 12 bestimmen. Der Pasteurisierungswert P ist durch die Integration über den Zeitraum des Garvorgangs gegeben:

$$P = \int \{10^{[(T_Z - T_D)/Z]}/D\}\ dt\ .$$

Dabei ist $T_Z$ die Temperatur im Zentrum 18 des Garguts 12. D und Z sind Werte für die thermische Beständigkeit einer bestimmten Gruppe von Bakterien. $T_D$ ist die Temperatur, bei der die relevanten Bakterien zerstört werden. Wenn der Benutzer mittels der Eingabeeinrichtung die Art des Garguts eingibt, werden die entsprechenden Parameter D, $T_D$ und Z in der Berechnungseinrichtung zugeordnet und bereit gestellt.

Die bevorzugte Ausführungsform der Erfindung hat den Vorteil, dass die Messung der relevanten Parameter drahtlos erfolgt. Die Bestimmung der Temperatur im Zentrum des Garguts 12 erfolgt auf eine Weise, die für den Benutzer besonders angenehm ist, da keine weiteren Geräte im Garraum 10 vorhanden sind. Innerhalb des Garraums 10 befinden sich lediglich der Einschub 14 und das Gargut 12.

Bei einer alternativen Ausführungsform können der Temperatursensor 20 und der Abstandssensor 22 schwenkbar angeordnet sein, so dass der schwenkbare Spiegel 30 nicht unbedingt erforderlich ist. Die alternative Ausführungsform kann einen fest angeordneten Spiegel aufweisen und die Richtung der Strahlung wird durch die Schwenkbewegungen des Temperatursensors 20 und des Abstandssensors 22 verändert. Ebenso kann die alternative Ausführungsform ohne Spiegel vorgesehen sein, wobei der Temperatursensor 20 und der Abstandssensor 22 schwenkbar im Garraum 10 oder oberhalb des Garraums 10 angeordnet sind.

Bei der bevorzugten Ausführungsform ist der Abstandssensor 22 als Infrarotsensor ausgebildet. Alternativ dazu könnte der Abstandssensor 22 beispielsweise als optischer Sensor oder Ultraschallsensor ausgebildet sein.

Der Temperatursensor 20 und/oder der Abstandssensor 22 können auch für andere Messungen verwendet werden. Mit dem Temperatursensor 20 kann beispielsweise festgestellt werden, ob Nahrungsmittel ausgetrocknet sind. Der Abstandssensor 22 kann beispielsweise auch verwendet werden, um die Höhe des Einschubs 14 im Garraum zu bestimmen.

Eine Abwandlung der Erfindung ist eine Vorrichtung zum Bestimmen der Kontur oder der geometrischen Form des Garguts 12, die den Abstandssensor 22 und gegebenenfalls auch den Spiegel 30 aufweist. Dabei ist der Abstandssensor 22 bzw. der Spiegel 30 schwenkbar, verschiebbar und/oder drehbar angebracht oder anbringbar, so dass die Oberseite des Garguts 12 abtastbar ist. Daraus lässt sich die Form des Garguts 12 berechnen.

Anstelle eines Spiegels 30 kann in allen Ausführungsformen auch ein Prisma oder eine andere optische Umlenkeinrichtung vorgesehen sein.

Alternativ oder zusätzlich zu der beschriebenen Messung der Oberflächentemperatur des Gargutes kann auch eine Umgebungstemperatur des Garguts gemessen werden und für die Berechnung der Temperatur im Gargut 12 herangezogen werden. Die Umgebungstemperatur wird insbesondere an einem Messort innerhalb des das Gargut umgebenden Garraumes 10 gemessen, vorzugsweise mit einem an dem Messort angeordneten Umgebungstemperaturfühler 15, der ein für den Garofen standardmäßig vorgesehener und an einem möglichst eine störungfreie Temperaturmessung der Umgebung oder Umgebungsluft des Gargutes erlaubenden Messort außerhalb des Gargutes 12 angeordneter Temperaturfühler sein kann.

**Bezugszeichenliste**

| | |
|---|---|
| 10 | Garraum |
| 12 | Gargut |
| 14 | Einschub |
| 15 | Umgebungstemperaturfühler |
| 16 | Isotherme |
| 18 | Zentrum des Garguts |
| 20 | Temperatursensor |
| 22 | Abstandssensor |
| 24 | Führungsschiene |
| 26 | Infrarotstrahl des Temperatursensors |
| 28 | Infrarotstrahl des Abstandssensors |
| 30 | Spiegel |
| 32 | Drehachse |
| 34 | Temperaturmesspunkt |
| 36 | Abstandsmesspunkt |
| $T_Z$ | Temperatur im Zentrum des Garguts |
| P | Pasteurisierungswert |

**Patentansprüche**

**1.** Vorrichtung zum Bestimmen der Temperatur im Inneren eines Garguts (12), wobei die Vorrichtung Folgendes aufweist:

- wenigstens einen Temperatursensor (20) zum Erfassen wenigstens einer Oberflächentemperatur des Garguts (12) und/oder einer Umgebungstemperatur des Garguts (12), insbesondere an einem Messort innerhalb eines das Gargut umgebenden Garraums (10), vorzugsweise mit einem an dem Messort angeordneten Umgebungstemperaturfühler (15),
**gekennzeichnet durch**
- wenigstens einen Abstandssensor (22) zum Erfassen einer Vielzahl von Abständen zwischen dem Abstandssensor (22) einerseits und einem oder einer Vielzahl von Abstandsmesspunkten (36) auf der Oberfläche des Garguts (12) andererseits, und
- wenigstens eine Zeitmesseinrichtung zum Erfassen der Zeit während einer Zubereitung des Garguts (12), und
- wenigstens eine Berechnungseinrichtung zum Berechnen der Temperatur im Inneren des Garguts (12) aus der Oberflächentemperatur des Garguts (12) und/oder der Umgebungstemperatur, des Abstands oder der Vielzahl von Abständen, der Zeit und einer Anfangstemperatur des Garguts (12).

**2.** Vorrichtung nach Anspruch 1,
**dadurch gekennzeichnet, dass**
die Berechnungseinrichtung zum Berechnen der Temperatur im Inneren des Garguts (12) auf der Grundlage einer Wärmeleitungsgleichung vorgesehen oder programmierbar ist.

**3.** Vorrichtung nach Anspruch 1 oder 2,
**dadurch gekennzeichnet, dass**
die Berechnungseinrichtung zum Berechnen der geometrischen Form des Garguts (12) aus der Vielzahl von Abständen vorgesehen oder programmierbar ist.

**4.** Vorrichtung nach Anspruch 3,
**dadurch gekennzeichnet, dass**

die Berechnungseinrichtung zum Berechnen der Temperatur im Inneren des Garguts (12) aus oder unter Zuhilfenahme der geometrischen Form des Garguts (12) vorgesehen oder programmierbar ist.

5. Vorrichtung nach einem der vorhergehenden Ansprüche,
**dadurch gekennzeichnet, dass**
die Berechnungseinrichtung zum Berechnen der Temperatur in einem Zentrum (18) des Garguts (12) vorgesehen oder programmierbar ist.

6. Vorrichtung nach einem der vorhergehenden Ansprüche,
**dadurch gekennzeichnet, dass**
der Temperatursensor (20) als ein optischer Sensor und/oder als ein Infrarotsensor ausgebildet ist.

7. Vorrichtung nach einem der vorhergehenden Ansprüche,
**dadurch gekennzeichnet, dass**
der Abstandssensor (22) als ein optischer Sensor und/oder als ein Infrarotsensor ausgebildet ist.

8. Vorrichtung nach Anspruch 6 oder 7,
**dadurch gekennzeichnet, dass**
der Temperatursensor (20) und/oder der Abstandssensor (22) schwenkbar, verschiebbar und/oder drehbar in oder an dem oder einem Garraum (10) angeordnet oder anbringbar sind, so dass durch wenigstens einen Lichtstrahl bzw. Infrarotstrahl (26, 28) die Oberfläche des Garguts (12) zumindest abschnittsweise abtastbar ist.

9. Vorrichtung nach einem der vorhergehenden Ansprüche,
**dadurch gekennzeichnet, dass**
die Vorrichtung einen Spiegel (30), ein Prisma oder eine andere optische Umlenkeinrichtung aufweist, der bzw. das bzw. die im Strahlengang zwischen dem Temperatursensor (20) und/oder Abstandssensor (22) einerseits und dem Gargut (12) bzw. einem für das Gargut (12) vorgesehenen Bereich andererseits angeordnet oder anbringbar ist.

10. Vorrichtung nach Anspruch 9,
**dadurch gekennzeichnet, dass**
der Spiegel (30) oder das Prisma oder die Umlenkeinrichtung schwenkbar, verschiebbar und/oder drehbar in oder an einem Garraum (10) angeordnet oder anbringbar ist.

11. Vorrichtung nach einem der vorhergehenden Ansprüche,
**dadurch gekennzeichnet, dass**
der Temperatursensor (20) zum Erfassen der Oberflächentemperatur an einer Vielzahl von Temperaturmesspunkten (34) auf der Oberfläche des Garguts (12) vorgesehen ist.

12. Vorrichtung nach einem der vorhergehenden Ansprüche,
**dadurch gekennzeichnet, dass**
die Abstandsmesspunkte (36) und/oder die Temperaturmesspunkte (34) nach einem vorbestimmten Schema ausgewählt oder auswählbar sind.

13. Vorrichtung nach einem der vorhergehenden Ansprüche,
**dadurch gekennzeichnet, dass**
der Temperatursensor (20), der Abstandssensor (22) und/oder der Spiegel (30) außerhalb des Garraums (10) in einem kühlen oder gekühlten Bereich angeordnet oder anbringbar sind.

14. Vorrichtung nach Anspruch 13,
**dadurch gekennzeichnet, dass**
der gekühlte Bereich als ein Kühlkanal mit wenigstens einer Kühleinrichtung, insbesondere einem Gebläse ausgebildet ist.

15. Vorrichtung nach einem der vorhergehenden Ansprüche,
**dadurch gekennzeichnet, dass**
die Vorrichtung eine Eingabeeinrichtung zum manuellen oder automatischen Eingeben von einem oder mehreren Parametern aufweist.

**16.** Vorrichtung nach Anspruch 15,
**dadurch gekennzeichnet, dass**
die Eingabeeinrichtung mit der Berechnungseinrichtung gekoppelt ist, so dass der oder die Parameter zum Berechnen der Temperatur im Inneren des Garguts (12) verwendbar sind.

**17.** Gargerät, das wenigstens eine Vorrichtung zum Bestimmen der Temperatur im Inneren eines Garguts (12) nach einem der Ansprüche 1 bis 16 aufweist.

**18.** Gargerät nach Anspruch 17,
**dadurch gekennzeichnet, dass**
das Gargerät einen kühlen oder gekühlten Bereich aufweist, in dem der Temperatursensor (20), der Abstandssensor (22) und/oder der Spiegel (30) angebracht oder anbringbar sind.

**19.** Gargerät nach Anspruch 18,
**dadurch gekennzeichnet, dass**
der kühle oder gekühlte Bereich als ein Gebläsekanal ausgebildet ist.

**20.** Verfahren zum Bestimmen der Temperatur im Inneren eines Garguts (12), wobei das Verfahren die folgenden Schritte aufweist:

- Erfassen wenigstens einer Temperatur an der Oberfläche des Garguts (12) und/oder wenigstens einer Umgebungstemperatur des Garguts (12), insbesondere an einem Messort innerhalb eines das Gargut umgebenden Garraums (10), vorzugsweise mit einem an dem Messort angeordneten Umgebungstemperaturfühler (15),
**gekennzeichnet durch**
- Erfassen eines oder einer Vielzahl von Abständen zwischen einer vorbestimmten Position (22) einerseits und einem oder einer Vielzahl von Abstandsmesspunkten (28) auf der Oberfläche des Garguts (12) andererseits, und
- Erfassen der Zeit während eines Garvorgangs, und
- Berechnen der Temperatur im Inneren des Garguts (12) aus der Oberflächentemperatur des Garguts (12) und/oder der Umgebungstemperatur des Garguts (12), dem Abstand oder der Vielzahl von Abständen, der Zeit und einer Anfangstemperatur des Garguts (12).

**21.** Verfahren nach Anspruch 20,
**dadurch gekennzeichnet, dass**
die Temperatur im Inneren des Garguts (12) auf der Grundlage einer Wärmeleitungsgleichung berechnet wird.

**22.** Verfahren nach Anspruch 20 oder 21,
**dadurch gekennzeichnet, dass**
die geometrische Form des Garguts (12) aus der Vielzahl von Abständen berechnet wird.

**23.** Verfahren nach einem der Ansprüche 20 bis 22,
**dadurch gekennzeichnet, dass**
die Temperatur im Inneren des Garguts (12) aus oder unter Zuhilfenahme der geometrischen Form des Garguts (12) berechnet wird.

**24.** Verfahren nach einem der Ansprüche 20 bis 23,
**dadurch gekennzeichnet, dass**
die Temperatur in einem Zentrum (18) des Garguts (12) bestimmt wird.

**25.** Verfahren nach einem der Ansprüche 20 bis 24,
**dadurch gekennzeichnet, dass**
die Vielzahl der Abstände durch Abtasten zumindest eines Abschnitts der Oberfläche des Garguts (12) vorzugsweise mittels eines Infrarotstrahls (28) oder eines Lichtstrahls erfasst wird.

**26.** Verfahren nach einem der Ansprüche 20 bis 25,
**dadurch gekennzeichnet, dass**
die Temperatur durch Abtasten zumindest eines Abschnitts der Oberfläche des Garguts (12) vorzugsweise mittels eines Infrarotstrahls (26) oder eines Lichtstrahls oder auch eines Ultraschallstrahls oder Radarstrahls, erfasst wird.

**27.** Verfahren nach einem der Ansprüche 20 bis 26,
**dadurch gekennzeichnet, dass**
die Temperatur im Inneren des Garguts (12) unter Verwendung des zeitlichen Verlaufs der Oberflächentemperatur des Garguts (12) berechnet wird.

**28.** Verfahren nach einem der Ansprüche 20 bis 27,
**dadurch gekennzeichnet, dass**
die Temperatur im Inneren des Garguts (12) unter Verwendung der Dichte des Garguts (12) berechnet wird.

**29.** Verfahren nach einem der Ansprüche 20 bis 28,
**dadurch gekennzeichnet, dass**
die Temperatur im Inneren des Garguts (12) unter Verwendung eines Wärmeübertragungskoeffizienten berechnet wird.

**30.** Verfahren nach einem der Ansprüche 20 bis 29,
**dadurch gekennzeichnet, dass**
die Temperatur im Inneren des Garguts (12) unter Verwendung der Wärmeleitfähigkeit des Garguts (12) berechnet wird.

**31.** Verfahren nach einem der Ansprüche 20 bis 30,
**dadurch gekennzeichnet, dass**
die Temperatur im Inneren des Garguts (12) unter Verwendung der Wärmekapazität des Garguts (12) berechnet wird.

**32.** Verfahren nach einem der Ansprüche 20 bis 31,
**dadurch gekennzeichnet, dass**
aus dem zeitlichen Verlauf der Temperatur im Zentrum des Garguts (12) der Pasteurisierungswert berechnet wird.

**33.** Verfahren nach einem der Ansprüche 20 bis 32, bei dem mittels der erfassten Oberflächentemperatur und/oder Umgebungstemperatur extrapoliert wird, vorzugsweise mittels einer Wärmeleitungsgleichung, nach welcher Zeit eine vorgegebene Kerntemperatur erreicht wird.


**Claims**

**1.** Device for determining the temperature in the interior of cooking material (12), wherein the device has the following:

- at least one temperature sensor (20) for registering at least one surface temperature of the cooking material (12) and/or an ambient temperature of the cooking material (12), in particular at a measuring site within a cooking chamber (10) surrounding the cooking material, preferably with an ambient-temperature sensor (15) arranged at the measuring site,

**characterised by**

- at least one distance sensor (22) for registering a plurality of distances between the distance sensor (22) on the one hand and one or a plurality of distance-measuring points (36) on the surface of the cooking material (12) on the other hand, and
- at least one time-measuring device for registering the time during preparation of the cooking material (12), and
- at least one calculating device for calculating the temperature in the interior of the cooking material (12) from the surface temperature of the cooking material (12) and/or the ambient temperature, the distance or the plurality of distances, the time and an initial temperature of the cooking material (12).

**2.** Device according to claim 1, **characterised in that** the calculating device is provided or can be programmed to calculate the temperature in the interior of the cooking material (12) on the basis of an equation of heat conduction.

**3.** Device according to claim 1 or 2, **characterised in that** the calculating device is provided or can be programmed to calculate the geometric shape of the cooking material (12) from the plurality of distances.

**4.** Device according to claim 3, **characterised in that** the calculating device is provided or can be programmed to calculate the temperature in the interior of the cooking material (12) from or with the aid of the geometric shape of the cooking material (12).

5. Device according to one of the preceding claims, **characterised in that** the calculating device is provided or can be programmed to calculate the temperature in a centre (18) of the cooking material (12).

6. Device according to one of the preceding claims, **characterised in that** the temperature sensor (20) is designed as an optical sensor and/or as an infrared sensor.

7. Device according to one of the preceding claims, **characterised in that** the distance sensor (22) is designed as an optical sensor and/or as an infrared sensor.

8. Device according to claim 6 or 7, **characterised in that** the temperature sensor (20) and/or the distance sensor (22) are arranged or can be attached to be pivotable, displaceable and/or rotatable in or on the or a cooking chamber (10), so that the surface of the cooking material (12) can be scanned at least in sections by at least one light beam or infrared beam (26, 28).

9. Device according to one of the preceding claims, **characterised in that** the device has a mirror (30), a prism or a further optical deflecting device, which is arranged or can be attached in the beam path between the temperature sensor (20) and/or distance sensor (22) on the one hand and the cooking material (12) or a region provided for the cooking material (12) on the other hand.

10. Device according to claim 9, **characterised in that** the mirror (30) or the prism or the deflecting device is arranged or can be attached to be pivotable, displaceable and/or rotatable in or on a cooking chamber (10).

11. Device according to one of the preceding claims, **characterised in that** the temperature sensor (20) is provided to register the surface temperature at a plurality of temperature-measuring points (34) on the surface of the cooking material (12).

12. Device according to one of the preceding claims, **characterised in that** the distance-measuring points (36) and/or the temperature-measuring points (34) are selected or can be selected according to a predetermined scheme.

13. Device according to one of the preceding claims, **characterised in that** the temperature sensor (20), the distance sensor (22) and/or the mirror (30) are arranged or can be attached outside of the cooking chamber (10) in a cool or cooled region.

14. Device according to claim 13, **characterised in that** the cooled region is designed as a cooling channel having at least one cooling device, in particular a fan.

15. Device according to one of the preceding claims, **characterised in that** the device has an input device for manual or automatic input of one or more parameters.

16. Device according to claim 15, **characterised in that** the input device is coupled to the calculating device, so that the parameter or parameters can be used to calculate the temperature in the interior of the cooking material (12).

17. Cooking appliance which has at least one device for determining the temperature in the interior of cooking material (12) according to one of claims 1 to 16.

18. Cooking appliance according to claim 17, **characterised in that** the cooking appliance has a cool or cooled region, in which the temperature sensor (20), the distance sensor (22) and/or the mirror (30) are attached or can be attached.

19. Cooking appliance according to claim 18, **characterised in that** the cool or cooled region is designed as a fan channel.

20. Process for determining the temperature in the interior of cooking material (12), wherein the process has the following steps:

   - registering at least one temperature on the surface of the cooking material (12) and/or at least an ambient temperature of the cooking material (12), in particular at a measuring site within a cooking chamber (10) surrounding the cooking material, preferably with an ambient-temperature sensor (15) arranged at the measuring site,

**characterised by**

- registering one or a plurality of distances between a predetermined position (22) on the one hand and one or a plurality of distance- measuring points (28) on the surface of the cooking material (12) on the other hand, and
- registering the time during a cooking process, and
- calculating the temperature in the interior of the cooking material (12) from the surface temperature of the cooking material (12) and/or the ambient temperature of the cooking material (12), the distance or the plurality of distances, the time and an initial temperature of the cooking material (12).

21. Process according to claim 20, **characterised in that** the temperature in the interior of the cooking material (12) is calculated on the basis of an equation of heat conduction.

22. Process according to claim 20 or 21, **characterised in that** the geometric shape of the cooking material (12) is calculated from the plurality of distances.

23. Process according to one of claims 20 to 22, **characterised in that** the temperature in the interior of the cooking material (12) is calculated from or with the aid of the geometric shape of the cooking material (12).

24. Process according to one of claims 20 to 23, **characterised in that** the temperature is determined in a centre (18) of the cooking material (12).

25. Process according to one of claims 20 to 24, **characterised in that** the plurality of distances is registered by scanning at least one section of the surface of the cooking material (12) preferably by means of an infrared beam (28) or a light beam.

26. Process according to one of claims 20 to 25, **characterised in that** the temperature is registered by scanning at least one section of the surface of the cooking material (12) preferably by means of an infrared beam (26) or a light beam or even an ultrasound beam or radar beam.

27. Process according to one of claims 20 to 26, **characterised in that** the temperature in the interior of the cooking material (12) is calculated using the temporal path of the surface temperature of the cooking material (12).

28. Process according to one of claims 20 to 27, **characterised in that** the temperature in the interior of the cooking material (12) is calculated using the density of the cooking material (12).

29. Process according to one of claims 20 to 28, **characterised in that** the temperature in the interior of the cooking material (12) is calculated using a heat transfer coefficient.

30. Process according to one of claims 20 to 29, **characterised in that** the temperature in the interior of the cooking material (12) is calculated using the thermal conductivity of the cooking material (12).

31. Process according to one of claims 20 to 30, **characterised in that** the temperature in the interior of the cooking material (12) is calculated using the thermal capacity of the cooking material (12).

32. Process according to one of claims 20 to 31, **characterised in that** the pasteurising value is calculated from the temporal path of the temperature in the centre of the cooking material (12).

33. Process according to one of claims 20 to 32, in which by means of the registered surface temperature and/or ambient temperature it is extrapolated, preferably by means of an equation of heat conduction, after which time a preset core temperature is reached.

**Revendications**

1. Dispositif pour déterminer la température à l'intérieur d'un produit à cuire (12), dans lequel le dispositif présente ce qui suit :

   - au moins un capteur de température (20) pour détecter au moins une température de surface du produit à cuire (12) et/ou une température ambiante du produit à cuire (12), en particulier en un lieu de mesure à l'intérieur d'un espace de cuisson (10) entourant le produit à cuire, de préférence avec une sonde de température ambiante (15) disposée au lieu de mesure,

   **caractérisé par**

   - au moins un capteur de distance (22) pour détecter une pluralité de distances entre le capteur de distance (22) d'une part, et un ou une pluralité de points de mesure de distance (36) à la surface du produit à cuire (12) d'autre part, et
   - au moins un dispositif de chronométrage pour détecter le temps pendant une préparation du produit à cuire (12), et
   - au moins un dispositif de calcul pour calculer la température à l'intérieur du produit à cuire (12) à partir de la température de surface du produit à cuire (12) et/ou de la température ambiante, de la distance ou de la pluralité de distances, du temps et d'une température initiale du produit à cuire (12).

2. Dispositif selon la revendication 1, **caractérisé en ce que** le dispositif de calcul est prévu ou programmable pour calculer la température à l'intérieur du produit à cuire (12) sur la base d'une équation de la chaleur.

3. Dispositif selon la revendication 1 ou 2, **caractérisé en ce que** le dispositif de calcul est prévu ou programmable pour calculer la forme géométrique du produit à cuire (12) à partir de la pluralité de distances.

4. Dispositif selon la revendication 3, **caractérisé en ce que** le dispositif de calcul est prévu ou programmable pour calculer la température à l'intérieur du produit à cuire (12) à partir ou à l'aide de la forme géométrique du produit à cuire (12).

5. Dispositif selon l'une quelconque des revendications précédentes, **caractérisé en ce que** le dispositif de calcul est prévu ou programmable pour calculer la température au centre (18) du produit à cuire (12).

6. Dispositif selon l'une quelconque des revendications précédentes, **caractérisé en ce que** le capteur de température (20) est réalisé comme un capteur optique et/ou comme un capteur infrarouge.

7. Dispositif selon l'une quelconque des revendications précédentes, **caractérisé en ce que** le capteur de distance (22) est réalisé comme un capteur optique et/ou un capteur infrarouge.

8. Dispositif selon la revendication 6 ou 7, **caractérisé en ce que** le capteur de température (20) et/ou le capteur de distance (22) sont disposés ou peuvent être montés de façon pivotante, mobile et/ou rotative dans, ou sur, le ou un espace de cuisson (10), de sorte qu'au moins un rayon lumineux ou rayon infrarouge (26, 28) permet de balayer la surface du produit à cuire (12) au moins par segments.

9. Dispositif selon l'une quelconque des revendications précédentes, **caractérisé en ce que** le dispositif présente un miroir (30), un prisme ou un autre dispositif de renvoi optique, qui est disposé ou peut être monté sur la trajectoire des rayons entre le capteur de température (20) et/ou le capteur de distance (22) d'une part et le produit à cuire (12) ou une zone prévue pour le produit à cuire (12) d'autre part.

10. Dispositif selon la revendication 9, **caractérisé en ce que** le miroir (30) ou le prisme ou le dispositif de renvoi est disposé ou peut être monté de façon pivotante, mobile et/ou rotative dans ou sur un espace de cuisson (10).

11. Dispositif selon l'une quelconque des revendications précédentes, **caractérisé en ce que** le capteur de température (20) pour la détection de la température de surface est prévu en une pluralité de points de mesure de température (34) à la surface du produit à cuire (12).

12. Dispositif selon l'une quelconque des revendications précédentes, **caractérisé en ce que** les points de mesure de distance (36) et/ou les points de mesure de température (34) sont sélectionnés ou sélectionnables selon un schéma prédéterminé.

**13.** Dispositif selon l'une quelconque des revendications précédentes, **caractérisé en ce que** le capteur de température (20), le capteur de distance (22) et/ou le miroir (30) sont disposés ou peuvent être montés à l'extérieur de l'espace de cuisson (10) dans une zone fraîche ou réfrigérée.

**14.** Dispositif selon la revendication 13, **caractérisé en ce que** la zone réfrigérée est réalisée comme un canal de refroidissement avec au moins un dispositif de refroidissement, en particulier un ventilateur.

**15.** Dispositif selon l'une quelconque des revendications précédentes, **caractérisé en ce que** le dispositif présente un dispositif d'entrée pour l'entrée manuelle ou automatique d'un ou de plusieurs paramètres.

**16.** Dispositif selon la revendication 15, **caractérisé en ce que** le dispositif d'entrée est couplé avec le dispositif de calcul de sorte que le ou les paramètres sont utilisables pour le calcul de la température à l'intérieur du produit à cuire (12).

**17.** Appareil de cuisson présentant au moins un dispositif pour déterminer la température à l'intérieur d'un produit à cuire (12) selon l'une quelconque des revendications 1 à 16.

**18.** Appareil selon la revendication 17, **caractérisé en ce que** l'appareil de cuisson présente une zone fraîche ou réfrigérée, dans laquelle le capteur de température (20), le capteur de distance (22) et/ou le miroir (30) sont montés ou peuvent être montés.

**19.** Appareil de cuisson selon la revendication 18, **caractérisé en ce que** la zone fraîche ou réfrigérée est réalisée comme un canal de ventilation.

**20.** Procédé pour déterminer la température à l'intérieur d'un produit à cuire (12), dans lequel le procédé présente l'étape suivante consistant à :

- détecter au moins une température à la surface du produit à cuire (12) et/ou au moins une température ambiante du produit à cuire (12), en particulier en un lieu de mesure à l'intérieur d'un espace de cuisson (10) entourant le produit à cuire, de préférence avec une sonde de température ambiante (15) disposée au lieu de mesure,

**caractérisé par** les étapes consistant à :

- détecter le temps pendant une opération de cuisson, et
- calculer la température à l'intérieur du produit à cuire (12) à partir de la température de surface du produit à cuire (12) et/ou de la température ambiante du produit à cuire (12), de la distance ou de la pluralité de distances, du temps et d'une température initiale du produit à cuire (12).

**21.** Procédé selon la revendication 20, **caractérisé en ce que** la température à l'intérieur du produit à cuire (12) est calculée sur la base d'une équation de la chaleur.

**22.** Procédé selon la revendication 20 ou 21, **caractérisé en ce que** la forme géométrique du produit à cuire (12) est calculée à partir de la pluralité de distances.

**23.** Procédé selon l'une quelconque des revendications 20 à 22, **caractérisé en ce que** la température est calculée à l'intérieur du produit à cuire (12) à partir ou à l'aide de la forme géométrique du produit à cuire (12).

**24.** Procédé selon l'une quelconque des revendications 20 à 23, **caractérisé en ce que** la température est déterminée au centre (18) du produit à cuire (12).

**25.** Procédé selon l'une quelconque des revendications 20 à 24, **caractérisé en ce que** la pluralité des distances est détectée par le balayage d'au moins un segment de la surface du produit à cuire (12), de préférence au moyen d'un rayon infrarouge (28) ou d'un rayon lumineux.

**26.** Procédé selon l'une quelconque des revendications 20 à 25, **caractérisé en ce que** la température est détectée par le balayage d'au moins un segment de la surface du produit à cuire (12), de préférence au moyen d'un rayon infrarouge (26) ou d'un rayon lumineux ou bien d'un rayonnement ultrasonore ou d'un faisceau radar.

**27.** Procédé selon l'une quelconque des revendications 20 à 26, **caractérisé en ce que** la température à l'intérieur du produit à cuire (12) est calculée en utilisant la variation temporelle de la température de surface du produit à cuire (12).

**28.** Procédé selon l'une quelconque des revendications 20 à 27, **caractérisé en ce que** la température à l'intérieur du produit à cuire (12) est calculée en utilisant la densité du produit à cuire (12).

**29.** Procédé selon l'une quelconque des revendications 20 à 28, **caractérisé en ce que** la température à l'intérieur du produit à cuire (12) est calculée en utilisant un coefficient de transfert de chaleur.

**30.** Procédé selon l'une quelconque des revendications 20 à 29, **caractérisé en ce que** la température à l'intérieur du produit à cuire (12) est calculée en utilisant la conductibilité thermique du produit à cuire (12).

**31.** Procédé selon l'une quelconque des revendications 20 à 30, **caractérisé en ce que** la température à l'intérieur du produit à cuire (12) est calculée en utilisant la capacité thermique du produit à cuire (12).

**32.** Procédé selon l'une quelconque des revendications 20 à 31, **caractérisé en ce que** la valeur de pasteurisation est calculée à partir de la variation temporelle de la température au centre du produit à cuire (12).

**33.** Procédé selon l'une quelconque des revendications 20 à 32, dans lequel au moyen de la température de surface et/ou de la température ambiante détectée(s), il est extrapolé, de préférence au moyen d'une équation de la chaleur, après quel délai une température centrale prédéfinie sera atteinte.

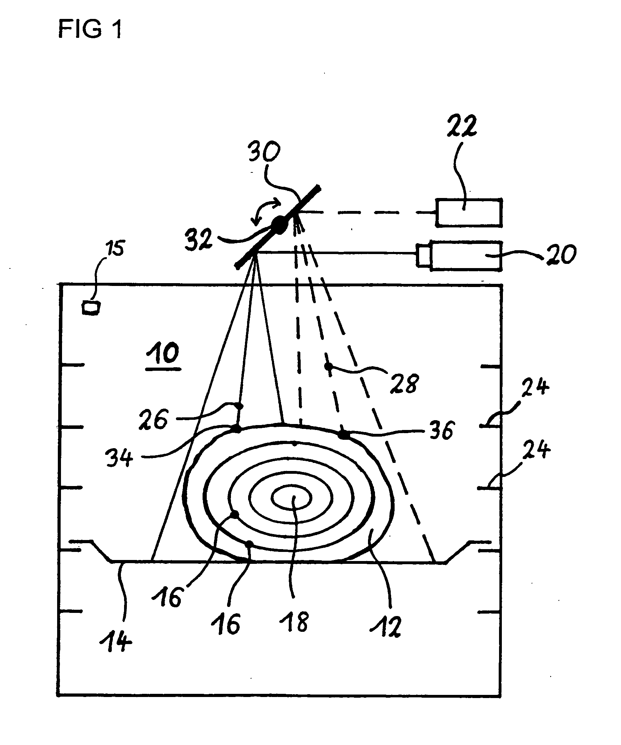

FIG 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1150549 A2

- EP 0264935 A2